# EUROPEAN PATENT SPECIFICATION

(11) **EP 0 725 758 B1**
(45) Date of publication and mention of the grant of the patent: **11.11.1998**
(21) Application number: 94900957.5
(22) Date of filing: 01.12.1993
(51) Int. Cl.: B66F 11/04, F16M 11/04, F16M 11/12, F16M 11/42

(54) **COUNTER-BALANCED LOAD CARRIERS**
DURCH GEGENGEWICHT AUSGEGLICHENE LASTTRÄGER
SUPPORT DE CHARGE A CONTREPOIDS

(30) Priority: 01.12.1992 GB 9225102; 11.02.1993 GB 9302700
(43) Date of publication of application: 14.08.1996
(60) Divisional application: 97118872.7
(73) Proprietor: Vitec Group plc, Bury St. Edmunds, Suffolk IP33 3TB (GB)
(72) Inventor: LINDSAY, Richard Arthur, Sufflok IP23 8HW (GB)
(74) Representative: Bayliss, Geoffrey Cyril
(86) International application number: GB9302473
(87) International publication number: WO9412424

(56) References cited:
- DE-A- 2 828 694
- FR-A- 2 488 543
- FR-A- 2 611 826
- GB-A- 1 440 596
- GB-A- 2 163 720
- US-A- 4 943 019
- US-A- 5 186 422

## Description

This invention relates to counter-balanced load carriers and is particularly, although not exclusively, applicable to load carriers for supporting television, video and cinematograph cameras, according to the preamble of claim 1.

Cameras for the above purposes are usually mounted on track or wheel mounted pedestals or on balanced arms. Pedestals are eminently suitable for use in open areas but are disadvantageous when the camera is required to move into a restricted space. Balanced arms such as the balanced arm described and illustrated in our U.K. Patent No. 2163720 enable a camera to be moved into a restricted space where a pedestal would not be able to move but involve a more cumbersome mechanism which is more difficult to transport and to store when not in use.

FR-A-2611826 and GB-A-2207109 disclose a telescoping crane for supporting a cine or video camera in which a main boom is mounted on a fulcrum support to tilt about a horizontal axis. A first beam extends telescopically from the front end of the main boom and a second boom extends telescopically from the first beam. A counterweight structure extends from the rear end of the main boom such that as the first beam and second beam extend in one direction, the counterweight structure extends in the opposition direction thereby substantially maintaining the beam in balance about the fulcrum support.

This invention provides a counter-balanced load carrier comprising a multi-stage elongatable arm, a base on which the arm is mounted on one stage thereof for pivotal movement in a vertical plane about a horizontal axis, a support for a payload mounted on another stage of the arm, and means to apply a counter-balancing load to the arm at a radius from said axis which varies automatically with extension and retraction of the arm in a fixed ratio with the radius of the payload support about said axis whereby the arm with a payload on the support is counter-balanced throughout its range of extension/retraction; wherein a control point is provided on the arm, at a radius from said axis and in a fixed ratio with the radius of the payload support whatever the extension/retraction of the arm whereby movement of the control point is reproduced by the payload in said fixed ratio and means are provided to constrain the control point to move horizontally, vertically or in any combination thereof to cause the payload to move in a corresponding manner.

More specifically the arm may be pivotally mounted on the base by a stage at or adjacent one end of the arm and the payload support may be located at the other end of the arm.

In any of the above arrangements the control means may comprise a vertically extending guideway in which a guide located at said control point engages and a horizontally extending guideway constrains movement of said vertical guideway, means being provided for locking the guide in the vertical guideway and for locking the vertical guideway in the horizontal guideway to control movement of the control point as required.

In an alternative arrangement the control point on the arm may be guided by a template defining a prescribed path and a cam follower is provided on the arm at the control point to engage and be guided by the template to control movement of the support on the arm.

Drive means may be provided for moving said control point (39) horizontally, vertically or in any combination thereof.

The control point may be located on a stage of the arm adjacent to the stage on which the arm is mounted for rotation about said horizontal axis.

In any of the above arrangements the means to apply a counter-balancing load to the arm may comprise a weight and/or a force applying device acting vertically on the arm on the same or separate stages.

In the latter case the arm may be pivotally mounted about said horizontal axis at a stage adjacent an end of the arm and a weight and/or force applying device acts on the stage at said one end.

More specifically a force applying device may act on said end stage of the arm or on another stage of the arm on the other side of the horizontal axis.

Furthermore the weight or force applying device may be adjustable to cater for different payloads on the payload support.

In the case where the arm has a control point constrained to move in a vertically extending guideway, the force applying device may be mounted on the guideway to act on the arm through said control point.

It is further preferred that the elongatable arm is a telescopic arm.

In any of the above arrangements means may be provided for interconnecting the respective stages of the arm whereby each stage moves by the same amount with respect to the adjacent stage or stages as the arm is extending/retracted.

For example a pulley system interlinks the stages to cause the stages to move by the same amounts with respect to each other as the arm is extended/retracted.

In one specific arrangement according to the invention one pulley system is provided for causing the stages to move by the same amounts as the arm is extended and another pulley system is provided for causing the stages to move by the same amounts as the arm is contracted.

In any of the above arrangements means may be provided to maintain the payload support in a fixed attitude with respect to the ground whatever the position the arm is tilted to about said horizontal axis.

For example the payload support may be mounted on the arm to tilt about a horizontal axis with respect to the arm and drive means may be provided extending through the arm operated by tilting the arm about said horizontal axis of the arm mounting to tilt the payload support with respect to the arm to maintain the support in a constant attitude to the ground.

In the case where a pulley system is provided for controlling the extension/retraction of the arm, the drive means for the payload support may be incorporated in the pulley system.

In any of the above arrangements the pivot for the arm may be mounted on a support which is mounted on said base for rotation about a vertical axis for swinging the arm about said axis.

Also in any of the above arrangements the base may be supported on wheels which may be steerable for movement over the floor/ground.

The following is a description of some specific embodiments of the invention, reference being made to the accompanying drawings in which:
Figure 1 is a diagrammatic view showing a camera carrier including a telescopic counter-balanced arm on which the camera is mounted shown in the fully extended position;
Figure 2 is a similar view to Figure 1 showing the telescopic arm fully contracted;
Figure 3 is a diagrammatic view of the arm showing a mechanism for controlling the attitude of a camera support at the arm of the arm with tilting of the arm to maintain the support horizontal;
Figure 4 is a diagrammatic view of the mechanism extending through the arm for controlling the relative extension of the several stages of the arm;
Figure 5 is a similar view to Figure 4 showing a mechanism which controls both extension and attitude of the camera support;
Figure 6 is a diagrammatic view of the camera carrier with a video camera installed and in use by an operator by direct movement of the camera;
Figure 7 illustrates a form of the carrier adapted for "crane" control operator from the mounted end of the arm;
Figure 8 is a further modified version of the carrier adapted for remote control of the camera;
Figure 9 is a similar view to Figure 8 showing a further arrangement according to the invention;
Figure 10 is a detailed view of the area A encircled on Figure 9;
Figure 11 is a further similar view to Figure 8 with the system for tilting the arm highlighted;
Figure 12 is a detailed view of the tilting system shown in Figure 11; and
Figure 13 is a plan view of the pedestal base showing a motor drive for rotation of the arm about a vertical axis.

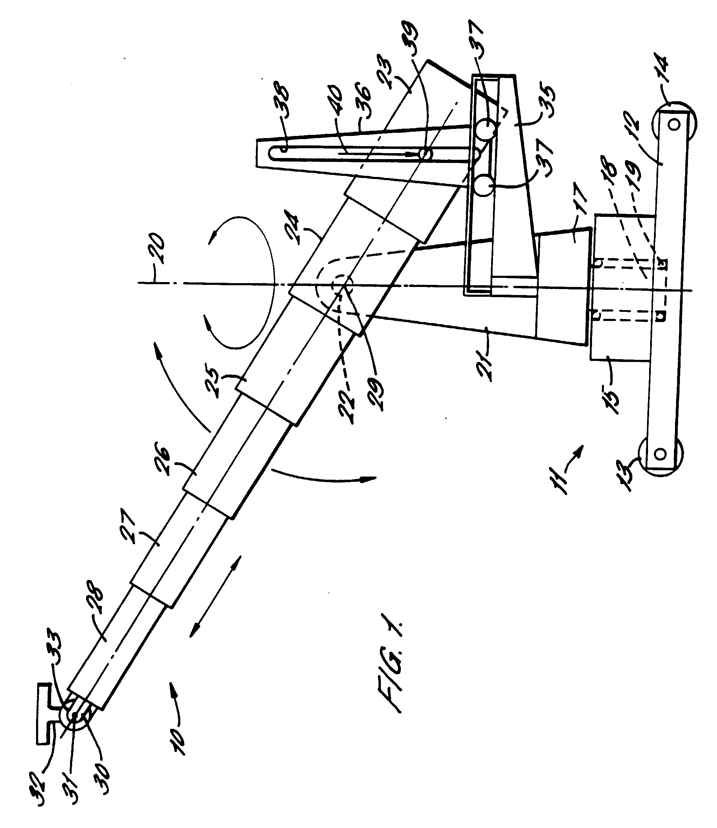

Referring firstly to Figure 1 of the drawings, there is shown a carrier for a television or video camera comprising a counter-balanced telescopic arm indicated generally at 10, mounted on a mobile base indicated generally at 11. The base comprises a platform 12 supported on fore and aft ground wheels 13, 14 to enable the base to be moved over the floor or ground on which it rests, the wheels being steerable through mechanisms not shown.

A hub 15 is mounted on the base on which a carrier 17 for the telescopic arm is mounted by means of a shaft 18 projecting downwardly from the carrier and engaging in bearings 19 supported in the hub for rotation of the carrier 17 about the vertical axis 20 or azimuth. A lock (not shown) is provided for locking the pedastal against rotation when required. Carrier 17 is formed with an upwardly extending bifuricated pedestal the spaced arms 21 of which have inwardly extending trunnions 22 at their upper ends to receive and support the arm for tilting about a horizontal axis as described below.

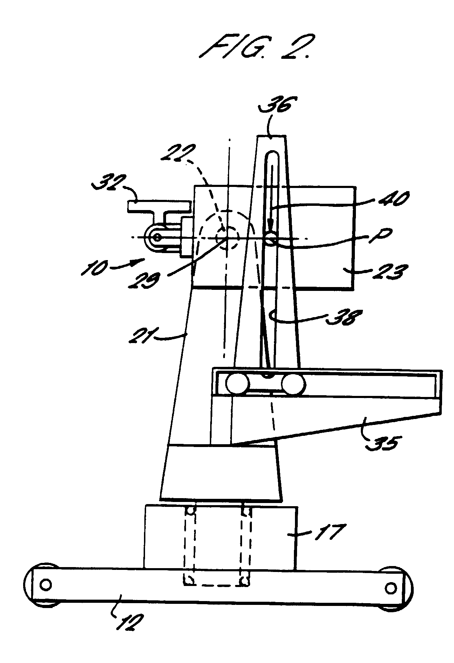

The telescopic arm comprises six elements or stages 23 to 28 which are slidably engaged one within the other to move between the extended position shown in Figure 1 and the retracted position shown in Figure 2. A mechanism which interlinks the successive elements of the arm so that when the arm is extended, all the elements extend by the same amounts with respect to each other and when contracted contract by the same amounts with respect to each other will be described later.

The arm is pivotally mounted on the trunnions 22 at the intermediate element 20 next to end element 23, for rotation of the arm about a horizontal axis 29 defined by the trunnions.

The outer end stage 28 of the arm terminates in a spaced pair of lugs 30 in which a spindle 31 is mounted. A camera support platform 32 is mounted for rotation on the spindle with a drive wheel 33 for controlling the movement of the platform. The platform is provided with a conventional dovetail section slideway or the like to receive a mounting plate of a camera. The platform is maintained horizontal whatever the inclination of the arm through a mechanism to be described later.

The end element 23 of the arm contains a fixed weight (not shown) intended to balance the arm whether telescoped or extended together with the camera platform and a nominal camera load on the platform.

The carrier 17 has a horizontally extending guideway 35 projecting from between the bracket and a carriage 36 has wheels 37 constrained to run in the guideway to support the carriage for horizontal movement along the guideway. The carriage is formed with a vertically extending slot 38 in which a pin 39 on the end stage 23 is constrained to slide so that as the arm tilts about the horizontal axis 29, so the pin will slide up and down the slot 38 and, at the same time the trolley will move along the guideway. A force applying device is mounted on the trolley 36 acting on the pin 39 in a vertically downward direction as indicated by the arrow 40 to apply an additional load to the arm as required to balance the arm. The force applying device is variable so that the load applied to the arm can be adjusted as required to suit the particular camera weight.

The force applying device may be a pneumatic ram with a large pressure chamber in which case the pressure supplied to the ram is adjusted to match the force required. The pneumatic ram could be a tapered pneumatic ram to provide a constant force for any extension of the ram. In an alternative arrangement, the trolley and force applying device could be dispensed with and a series of weights provided to be added to or taken from the end stage to achieve counter-balancing of the arm.

Locking means may be provided for locking the carriage on the guideway and the pin in the slot of the carriage to lock the arm in a fixed position of adjustment if required. Likewise, a locking device may be provided for locking the carrier 17 in a selected rotational position in the hub 15.

The following table shows the effect of locking and unlocking, either alone or in combination, any of the aforementioned locking means.

| Vertical | Horizontal | Azimuth | Effect on load carrying platform |
|---|---|---|---|
| locked | locked | locked | locked in selected position |
| locked | locked | unlocked | peripheral circular motion on horizontal plane |
| locked | unlocked | locked | motion in horizontal line. |
| unlocked | locked | locked | motion in vertical line. |
| locked | unlocked | unlocked | motion on horizontal plane. |
| unlocked | unlocked | locked | motion on vertical plane. |
| unlocked | locked | unlocked | motion on a cylindrical plane. |
| unlocked | unlocked | unlocked | complete freedom of motion. |

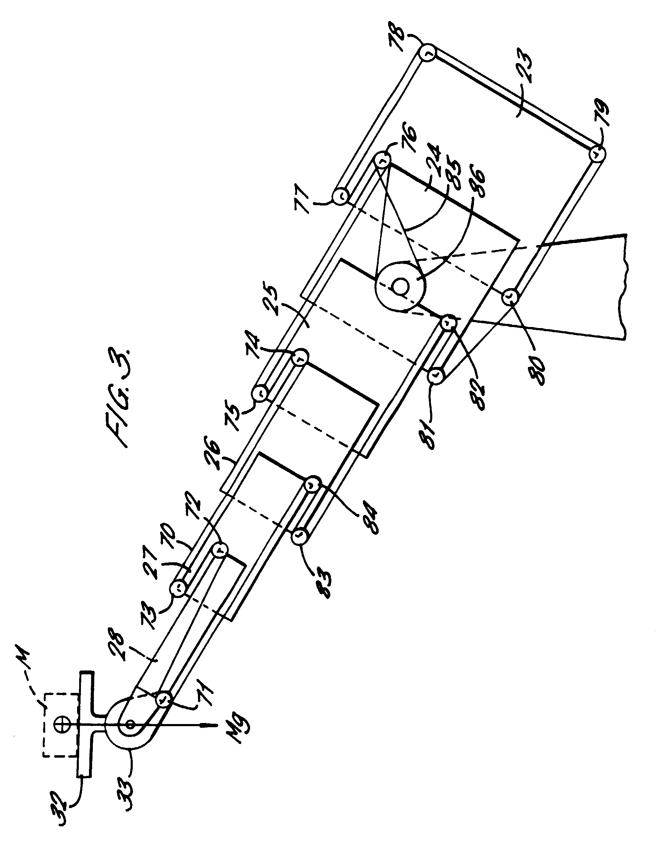

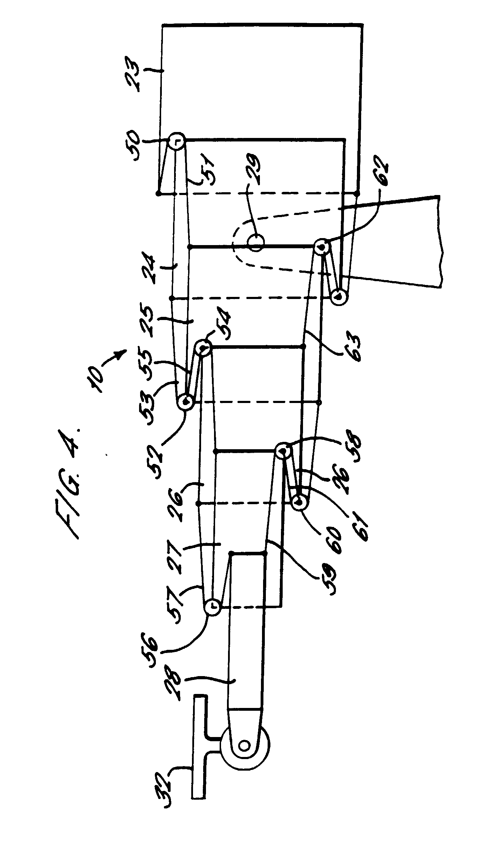

As indicated above, the stages of the ram extend and contract by uniform amounts and the mechanism interconnecting the stages to achieve this will now be described with reference to Figure 4 of the accompanying drawings. Looking at the upper side of the arm, the lower or inner end of intermediate stage 24 carries a rotatable pulley 50 and a wire 51 extends over the pulley 50 and is anchored to the upper or outer end of the stage 23 and the bottom or inner end of stage 25. The upper or outer end of stage 25 is provided with a pulley 52 around which a wire or other form of tether 53 extends from the outer end of stage 24 to the bottom end of stage 26. The bottom end of stage 26 is also provided with a freely rotatable pulley 54 and a wire 55 is connected to the upper end of stage 25 and extends around the pulley 54 to the bottom of stage 27. Finally, the outer end of stage 27 has a freely rotatable pulley 56 and a wire 57 extends from the upper end of stage 26 around the pulley to the bottom end of stage 28. The arrangement continues along the underside of the arm with a pulley 58 at the bottom of stage 27 with a wire 59 extending from the bottom of stage 28 around the pulley to the top of stage 26; a pulley 60 at the top of stage 26 with a wire 61 extending from the bottom of stage 27 to the top of stage 25 and a pulley 62 at the bottom of stage 25 and a wire 63 extending from the bottom of stage 26 around the pulley to the top of stage 23.

The interconnections between the stages provided by the wire/pulley arrangements ensures that as the arm is extended, all stages of the arm move outwardly with respect to each other by the same amounts and, as the stages of the arm are telescoped together, they move together by the same amounts. As a result, the ratio between the radius of the camera platform and axis 29 and the radius of the weight or other load acting on the stage 23 about stages 29 maintains a fixed ratio so that the arm is counter-balanced throughout its range of extension and retraction.

Reference is now made to Figure 3 of the drawings which illustrates the mechanism for maintaining the camera platform 32 horizontal throughout the range of pivotal movement of the telescopic arm abouts its horizontal axis. The system comprises an endless cable or belt transmission 70 extending from a pulley 71 at the outer end of stage 28 of the arm, around a pulley 72 at the bottom of stage 28, around a pulley 73 at the upper end of stage 27, around a pulley 74 at the bottom of stage 26, around a pulley 75 at the top of stage 25, around a pulley 76 at the bottom of stage 24, around a pulley 77 at the top of stage 23, around pulleys 78 and 79 at the bottom of stage 23, around a pulley 80 at the top of stage 23, around a pulley 81 at the top of stage 24, around a pulley 82 at the bottom of stage 25, around a pulley 83 at the top of stage 26, around a pulley 84 at the bottom of stage 27 and thence around the pulley 71. The pulley 76 is coupled side-by-side with a similar pulley which is driven by a twistless endless belt drive 85 encircling a fixed wheel 86 mounted on the spindle supporting the arm for rotation. Thus, as the arm rotates about the spindle, the fixed pulley 86 causes the pulley 76 to rotate driving the endless belt 70 in one or other direction with respect to the arm. As indicated above, the belt 70 drives pulley 71 at the outer end of the outer stage 28 of the arm. A further pulley is mounted side-by-side with pulley 71 having an endless belt drive 72 to the wheel 33 to which the camera platform is fixed. Thus, when the belt drives the pulley 71 as a result of pivoting of the arm about the axis 29, the camera platform is also rotated with respect to the arm and the various ratios of the drives are set so that the platform is maintained in its horizontal attitude as illustrated in Figure 3 throughout the tilting of the arm.

Other possible arrangements for maintaining the platform horizontal include:
(i) telescopic torque shaft;
(ii) gimballed camera mounting;
(iii) servo motor control of load orientation with rotational sensor at axis 29;
(iv) force applied through flexible cable;
(v) a hydraulic drive;
(vi) a servo motor drive.

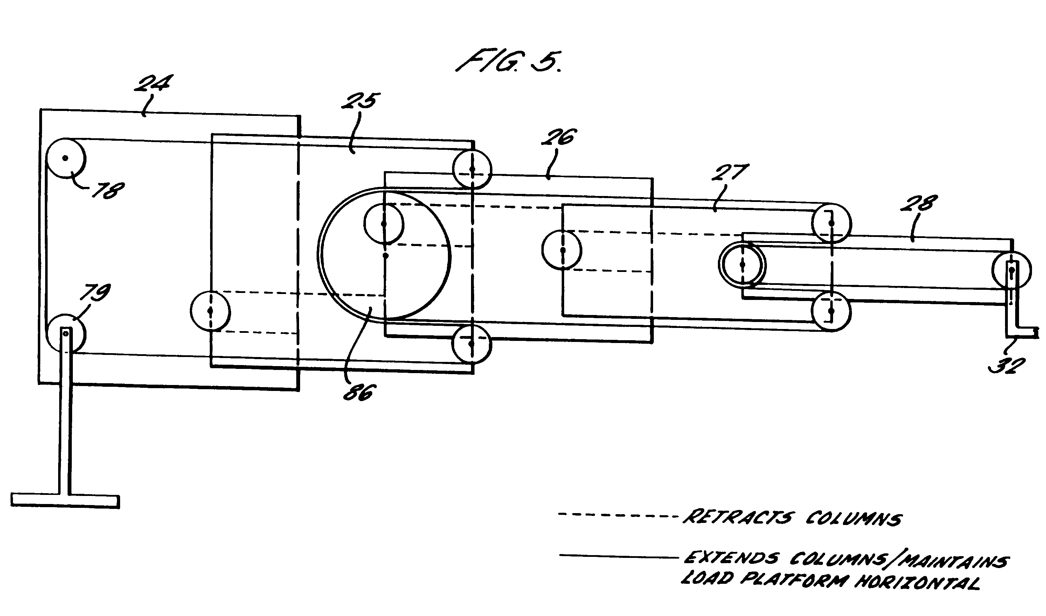

A further arrangement is illustrated in Fig. 5 in which the system for controlling the extension of the arm is combined with the endless belt system for maintaining the camera support horizontal.

Other possible arrangements for extending/retracting the telescopic arm include:
i) hydraulic drive
ii) servo motors

Manual positional control of the load carrying platform is preferably performed directly at the load carrying platform but remote positional control of the load carrying platform is preferably performed at the control pivot points of the arm and may, as the balanced arm is fully balanced, be controlled by three small electric motors, or the like; one for vertical, one for horizontal and one in azimuth; remotely controlled via signal lines. Control by this method has the added advantage that the movement of the load is proportional to the control point displacewment provided by the motors.

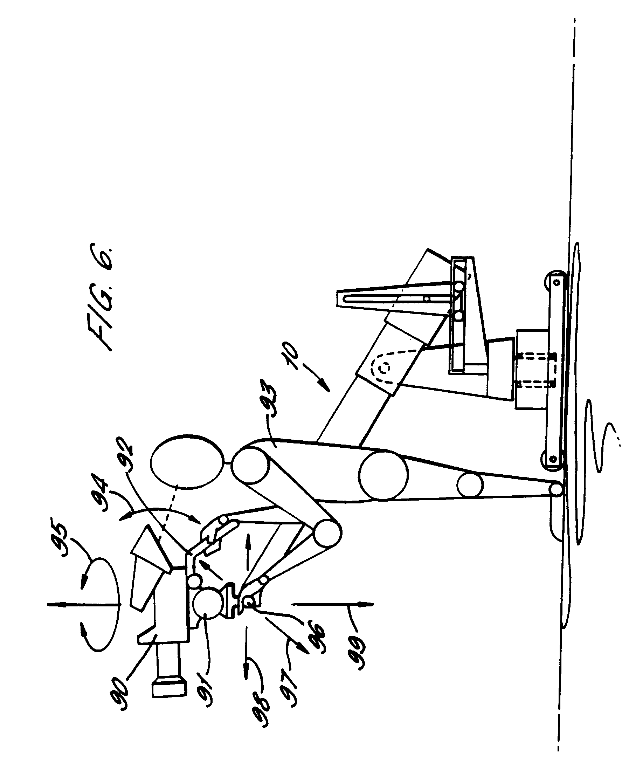

Figure 6 of the drawings illustrates the carrier in use supporting a T.V. camera 90 mounted on the platform 32 by means of a pan/tilt head indicated at 91. The camera has a hand control bar 92 for an operator illustrated diagrammatically at 93, for moving the camera in tilt and pan as indicated by the arrows 94 and 95. The upper end of the arm 10 has a cross bar 96 for the operator to move the camera laterally as indicated by the arrows 97 fore and aft as indicated by the arrows 98 and up and down as indicated by the arrows 99 as provided by the telescopic arm and its mounting with the movement of the camera being counter-balanced throughout.

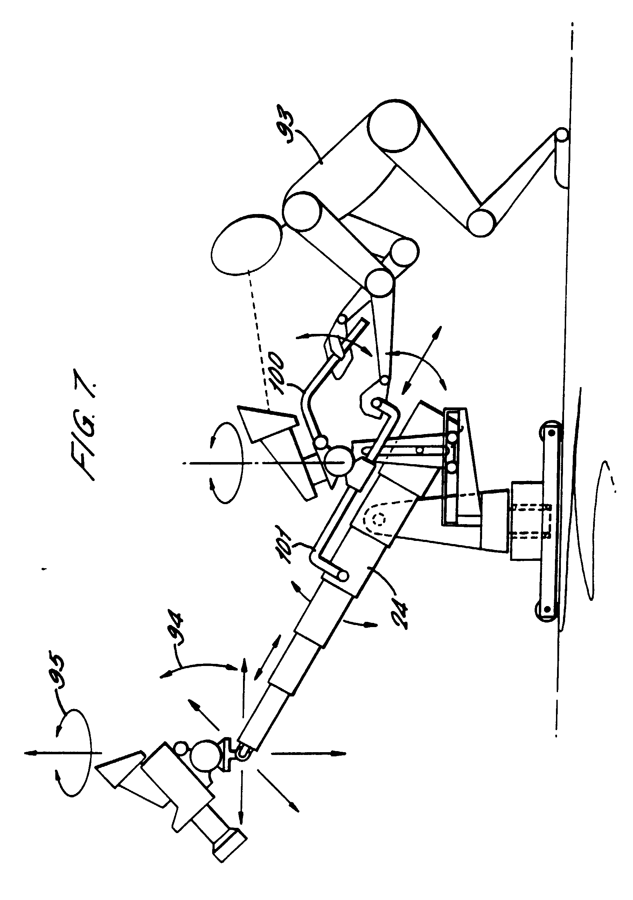

Figure 7 of the drawings shows a variation on the arrangement in Figure 5 in which the camera mounting is provided with servo motors for the pan and tilt movements 94, 95 with a controller 100 at the lower end of the arm for the operator to effect pan and tilt movement of the camera. Lateral, fore and aft and up and down movement of the camera is effected through a control arm 101 and connected to an intermediate stage 24 of the arm for effecting tilt rotation and extension/retraction of the arm.

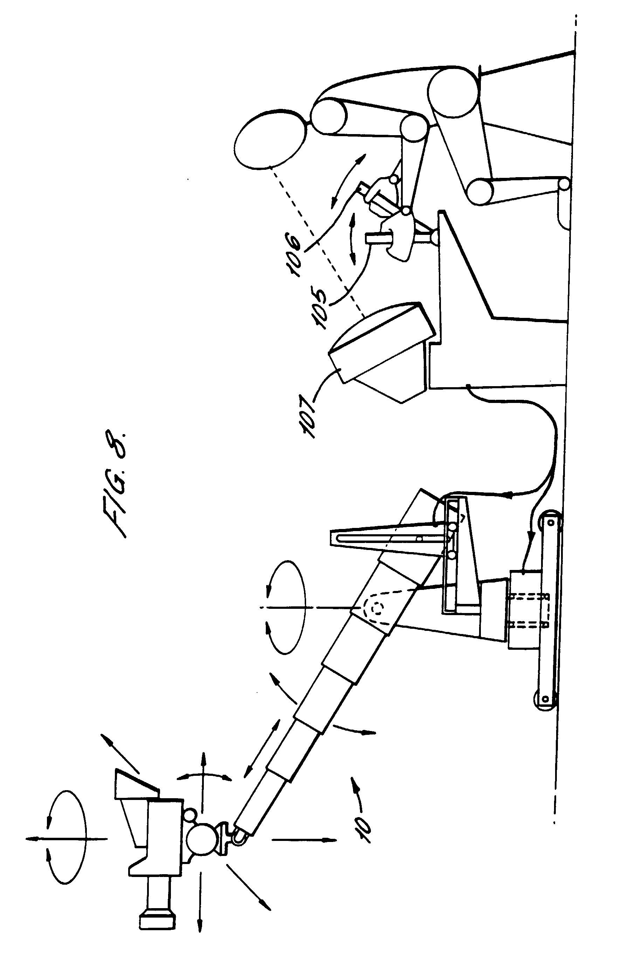

Figure 8 of the drawings shows a further modification in which servo motors are also provided for extending/retracting the arm rotating the carrier 17 about the platform and tilting the arm about the carrier operable from a remote control camera position by means of joy sticks indicated at 105 and 106 with a remote monitor 107 for the camera operator to review the picture seen by the camera.

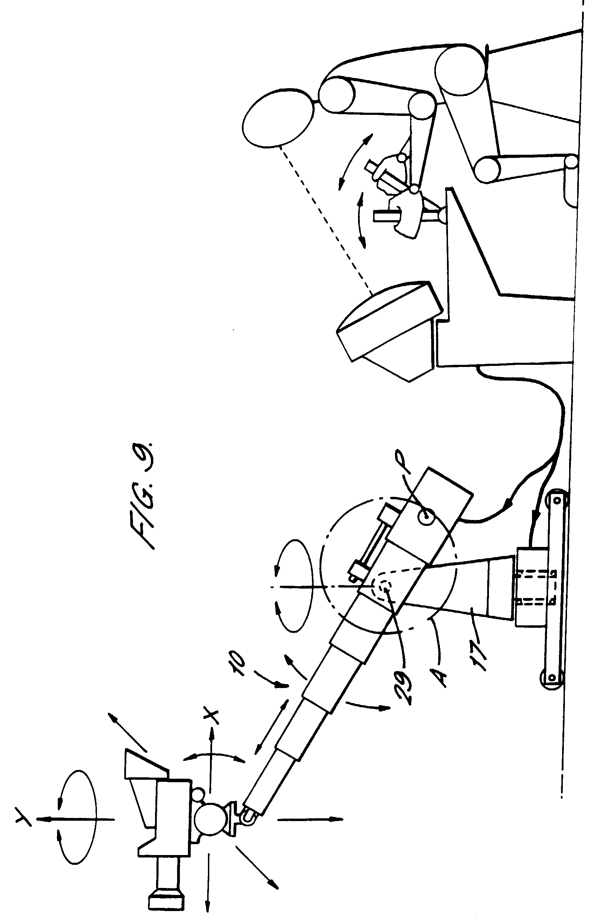

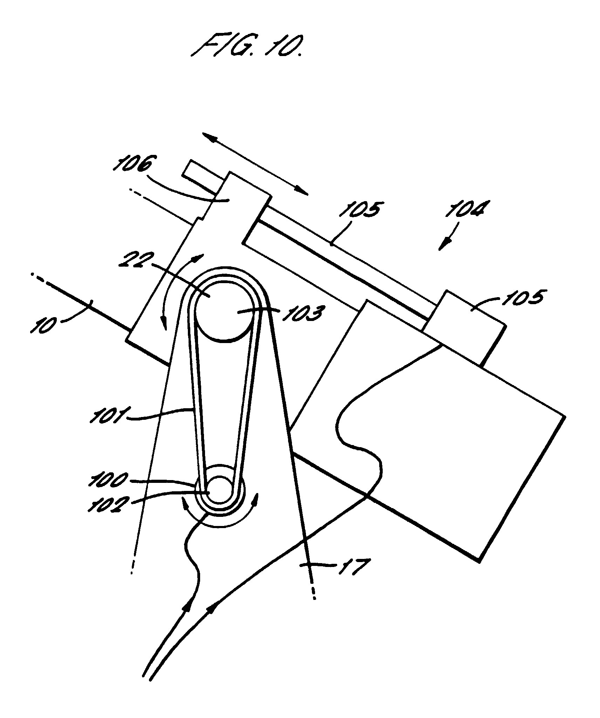

Referring to Figures 9 and 10 of the drawings, a drive for tilting the extendable arm 10 about its horizontal axis 29 is illustrated comprising a motor 100 mounted within the column 17 of the pedestal below the arm and having a chain/belt drive 101 extending around sprockets/pullies 102, 103 secured to the motor and to the shaft 22 on which the arm is mounted. The motor is controlled from the remote control camera position illustrated in rotation of the arm as directed by the operator.

A further feature of the construction is the use of a linear actuator for positively extending and retracting the arm. The linear actuator drive unit 104 is mounted on the lowermost section of the arm and the drive element 105 of the actuator extends parallel to the arm to engage in a fixture 106 on the adjacent element of the arm. The arm contains the cable/belt mechanism described above with reference to Figures 1 to 5 of the drawings for transmitting movement between the respective sections of the arm so that the sections move in unison by the same amount with respect to each other as the arm is extended and retracted. Thus movement of the lowermost section of the arm with respect to the adjacent section by the linear actuator by a precise predetermined amount under the control of the camera operator will move all of the sections of the arm with respect to each other by the same amount to provide a movement at the camera support end of the arm which is the sum of the movements of the respective sections with respect to each other.

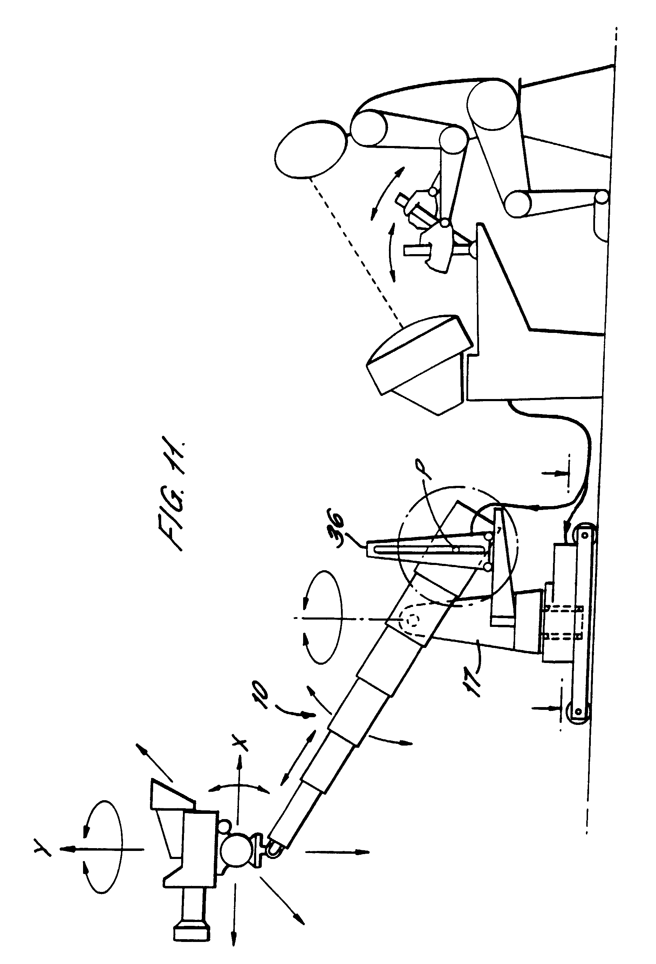

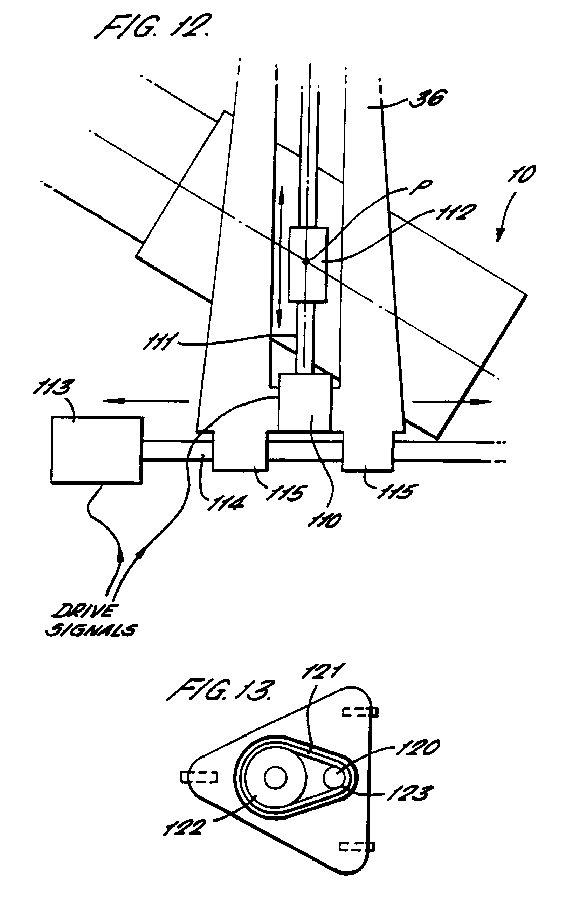

Referring now to Figure 12 of the drawings, a motorised arrangement for the vertical/horizontal movements provided by the carriage 36 is shown. A vertically extending linear actuator is mounted on the carriage having a motor unit 110 with an elongate drive element 111 engaging in a fixture 112 secured to the arm at control point P. A horizontally extending linear actuator is mounted on the column comprising a motor unit 113 and an elongate drive element 114 engaging in fixtures 115 on the carriage horizontally. Thus the position of the control point can be adjusted to control the X/Y position of the camera platform from the remote control position.

In addition, a further drive motor is provided for rotating the column of the pedestal about its vertical axis on the base controlled from the remote control station for the camera. Referring to Figure 13 a motor unit 120 is mounted on the base of the pedestal with a chain/belt drive 121 extending around sprockets/pulleys 122, 123 on the motor shaft and column end for rotating the column. Thus the whole of the movements of the camera and pedestal can be governed from the remote control station by the camera operator.

It will be appreciated that the invention is not confined to the above described embodiments and many modifications may be made thereto without departing from the scope of the invention. For example the arrangements for providing horizontal/vertical movement of the end stage of the arm comprising the horizontal guideway 35 and carriage 36 with its vertical guideway may be replaced by other guidance arrangements such as templates defining prescribed movements and cams on the arm to follow the templates.

## Claims

1. A counter-balanced load-carrier comprising a multi-stage elongatable arm (10), a base (11) on which the arm is mounted on one stage (24) thereof for pivotal movement in a vertical plane about a horizontal axis (29), a support (32) for a payload mounted on another stage (28) of the arm, and means (23) to apply a counter-balancing load to the arm at a radius from said axis which varies automatically with extension and retraction of the arm in a fixed ratio with the radius of the payload support about said axis whereby the arm with a payload on the support is counter-balanced throughout its range of extension/retraction; characterised in that a control point (39) is provided on a stage of the arm other than said one stage and at a radius from said axis and in a fixed ratio with the radius of the payload support whatever the extension/retraction of the arm whereby movement of the control point is reproduced by the payload in said fixed ratio and means (35,36,37,38) to constrain the control point to move either horizontally or vertically or in a combination of horizontal and vertical movement in a corresponding manner to the movement of the payload.

2. A load carrier as claimed in Claim 1, characterised in that the arm (10) is pivotally mounted on the base by a stage (27) at or adjacent one end of the arm and the payload support (32) is located at the other end of the arm.

3. A load carrier as claimed in Claim 1, characterised in that said constraining means comprises a vertically extending guideway in which a guide located at said control point engages and a horizontally extending guideway (35) constrains movement of said vertical guideway, means being provided for locking the guide in the vertical guideway and for locking the vertical guideway in the horizontal guideway to control movement of the control point as required.

4. A load carrier as claimed in Claim 1, characterised in that the control point (39) on the arm (10) is guided by a template defining a prescribed path and a cam follower is provided on the arm at the control point to engage and be guided by the template to control movement of the support arm.

5. A load carrier as claimed in Claim 1, characterised in that drive means are provided for moving said control point (39) horizontally, vertically or in any combination thereof.

6. A load carrier as claimed in Claim 1, characterised in that the control point (39) is located on a stage (23) of the arm adjacent to the stage (24) on which the arm is mounted for rotation about said horizontal axis.

7. A load carrier as claimed in Claim 1, characterised in that the means to apply a counter-balancing load to the arm comprise a weight (23) and/or a force applying device acting vertically on the arm on the same or separate stages.

8. A load carrier as claimed in Claim 7, characterised in that the arm (10) is pivotally mounted about said horizontal axis at a stage adjacent an end of the arm and a weight and/or force applying device acts on the stage at said one end.

9. A load carrier as claimed in Claim 8, characterised in that a force applying device acts on said end stage (23) of the arm (10) or on another stage of the arm on the other side of the horizontal axis.

10. A load carrier as claimed in Claim 7, characterised in that the weight or force applying device are adjustable to cater for different payloads on the payload support (32).

11. A load carrier as claimed in Claim 3, characterised in that the force applying device is mounted on the guideway to act on the arm through said control point.

12. A load carrier as claimed in Claim 1, characterised in that the elongatable arm (10) is a telescopic arm.

13. A load carrier as claimed in Claim 2, characterised in that a pulley system (76 to 80) interlinks the stages to cause the stages (23 to 28) to move by the same amounts with respect to each other as the arm is extending/retracted.

14. A load carrier as claimed in Claim 13, characterised in that one pulley system (76 to 80) is provided for causing the stages to move by the same amounts as the arm is extended and another pulley system is provided for causing the stages to move by the same amounts as the arm is contracted.

15. A load carrier as claimed in Claim 2, characterised in that hydraulically operated means are provided between the respective stages of the arm for controlling extension/retraction of the arm.

16. A load carrier as claimed in Claim 1, characterised in that the pivot for the arm is mounted on a support which is mounted on said base for rotation about a vertical axis for swinging the arm about said axis.

17. A load carrier as claimed in Claim 1, characterised in that the base (11) is supported on wheels (13,14) for movement of the base over the floor/ground.

18. A load carrier as claimed in Claim 2, wherein power operated means are provided for extending/retracting the arm (10) and tilting the arm about said horizontal axis (29) and a remote control unit (105,106) is provided for controlling the power means.

19. A load carrier as claimed in Claim 2, wherein the power means comprise a first power unit acting between adjacent stages of the arm for extending/retracting the arm and a second power unit acting on the arm to rotate the arm about said horizontal axis.

20. A load carrier as claimed in Claim 19, wherein the arm has a control point at a radius from the horizontal axis of the arm in a fixed ratio with the radius of the payload support whatever the extension/retraction of arm whereby movement of the control point is reproduced by the payload in said fixed ratio and said power means act on the arm at said control point for causing the arm to extend/retract and tilt.

21. A load carrier as claimed in Claim 20, wherein the power means acting on the control point of the arm comprises two power units for moving the control point in orthogonal directions to effect extension/retraction and tilting of the arm.

22. A load carrier as claimed in Claim 21, wherein one of the power units acts in a vertical direction on the control point and the other power unit acts in a horizontal direction on the control point.

23. A load carrier as claimed in Claim 17, wherein a further power unit is provided for rotating the arm about a vertical axis extending through the horizontal axis about which the arm tilts, the further power unit also being under the control of said control units.

24. A counter-balanced load carrier as claimed in Claim 1, wherein the payload support on the arm is adapted to receive a T.V., video or cinematographic camera mounted on the support for pan and tilt movement.

25. A load carrier as claimed in Claim 24, wherein servo-motors are provided for moving the camera with respect to the support in pan and tilt directions with respect to the support and control means are provided for effecting said pan and tilt movement of the camera.

26. A load carrier as claimed in Claim 25, wherein the control means for the servo motors are located adjacent the end of the arm remote from the payload support.

27. A load carrier as claimed in Claim 26, wherein the control means comprise a universally mounted control arm rotation of which about a vertical axis causes pan movement of the camera and rotation about the horizontal axis causes tilt movement of the camera through said servo-motors.

28. A load carrier as claimed in Claim 27, wherein a viewfinder is mounted on the control arm and is remotely coupled to the camera to replicate the field of view of the camera at the control member.

## Patentansprüche

1. Ausbalancierter Lastträger, umfassend einen mehrstufig verlängerbaren Arm (10), eine Basis (11), an welcher der Arm an einer Stufe (24) desselben für eine Schwenkbewegung in einer vertikalen Ebene um eine horizontale Achse (29) herum angebracht ist, ein Halter (32) für eine an einer anderen Stufe (28) des Arms angebrachte Nutzlast und Mittel (23) zum Ausüben einer Ausgleichsbelastung auf den Arm bei einem Radius von der Achse, der automatisch bei einem Ausziehen und einem Einziehen des Arms in einer festen Beziehung zu dem Radius des Nutzlasthalters um die Achse variiert, wodurch der Arm mit einer Nutzlast an dem Träger über seinen ganzen Auszugs-/Einzugsbereich ausbalanciert ist, dadurch gekennzeichnet, daß eine Steuerstelle (39) vorgesehen ist an einer Stufe des Arms, die von der einen Stufe verschieden ist, und bei einem Radius von der Achse und in einer festen Beziehung zu dem Radius des Nutzlasthalters, gleichgültig wie der Auszug/Einzug des Arms ist, wodurch eine Bewegung der Steuerstelle durch die Nutzlast in der festen Beziehung reproduziert wird, und Mittel (35, 36, 37, 38) vorgesehen sind, um die Steuerstelle zu zwingen, sich entweder horizontal oder vertikal oder in einer Kombination von horizontaler und vertikaler Bewegung in einer zu der Bewegung der Nutzlast korrespondierenden Weise zu bewegen.

2. Lastträger nach Anspruch 1, dadurch gekennzeichnet, daß der Arm (10) an der Basis durch eine Stufe (27) bei oder benachbart einem Ende des Arms schwenkbar angebracht ist und der Nutzlasthalter (32) an dem anderen Ende des Arms angeordnet ist.

3. Lastträger nach Anspruch 1, dadurch gekennzeichnet, daß die Zwangsmittel eine sich vertikal erstreckende Führungsbahn umfassen, in welche ein an der Steuerstelle angeordnetes Führungsteil eingreift und eine sich horizontal erstreckende Führungsbahn (35) eine Bewegung der vertikalen Führungsbahn beschränkt, wobei Mittel vorgesehen sind, um das Führungsteil in der vertikalen Führungsbahn zu blockieren und um die vertikale Führungsbahn in der horizontalen Führungsbahn zu blockieren, um eine Bewegung der Steuerstelle wie erforderlich zu kontrollieren.

4. Lastträger nach Anspruch 1, dadurch gekennzeichnet, daß die Steuerstelle (39) an dem Arm (10) durch eine Schablone geführt wird, die einen vorgeschriebenen Weg definiert, und ein Gleitstück an dem Arm an der Steuerstelle vorgesehen ist, um mit der Schablone in Eingriff zu stehen und durch die Schablone geführt zu werden, um eine Bewegung des Haltearms zu kontrollieren.

5. Lastträger nach Anspruch 1, dadurch gekennzeichnet, daß Antriebsmittel vorgesehen sind, um die Steuerstelle (39) horizontal, vertikal oder in einer Kombination davon zu bewegen.

6. Lastträger nach Anspruch 1, dadurch gekennzeichnet, daß die Steuerstelle (39) an einer Stufe (23) des Arms benachbart derjenigen Stufe (24) angeordnet ist, an welcher der Arm zur Drehung um die horizontale Achse angebracht ist.

7. Lastträger nach Anspruch 1, dadurch gekennzeichnet, daß die Mittel zum Ausüben einer Ausgleichsbelastung auf den Arm ein Gewicht (23) und/oder ein Kraftausübungsgerät umfassen, das vertikal auf den Arm an der gleichen oder einer anderen Stufe wirkt.

8. Lastträger nach Anspruch 7, dadurch gekennzeichnet, daß der Arm (10) schwenkbar um die horizontale Achse an einer Stufe benachbart einem Ende des Arms angebracht ist, und ein Gewicht und/oder ein Kraftausübungsgerät auf die Stufe an dem einen Ende wirkt.

9. Lastträger nach Anspruch 8, dadurch gekennzeichnet, daß ein Kraftausübungsgerät auf die Endstufe (23) des Arms (10) oder eine andere Stufe des Arms auf der anderen Seite der horizontalen Achse wirkt.

10. Lastträger nach Anspruch 7, dadurch gekennzeichnet, daß das Gewicht oder das Kraftausübungsgerät einstellbar sind, um verschiedenen Nutzlasten auf dem Nutzlasthalter (32) gerecht zu werden.

11. Lastträger nach Anspruch 3, dadurch gekennzeichnet, daß das Kraftausübungsgerät an der Führungsbahn angebracht ist, um durch die Steuerstelle auf den Arm zu wirken.

12. Lastträger nach Anspruch 1, dadurch gekennzeichnet, daß der verlängerbare Arm (10) ein Teleskoparm ist.

13. Lastträger nach Anspruch 2, dadurch gekennzeichnet, daß ein Scheibensystem (76 - 80) die Stufen miteinander verbindet, um zu bewirken, daß die Stufen (23 - 28) sich um die gleichen Ausmaße zueinander bewegen, wenn der Arm ausgezogen/eingezogen wird.

14. Lastträger nach Anspruch 13, dadurch gekennzeichnet, daß ein Scheibensystem (76 - 80) vorgesehen ist, um zu bewirken, daß die Stufen sich um die gleichen Ausmaße bewegen, wenn der Arm ausgezogen wird, und ein weiteres Scheibensystem vorgesehen ist, um zu bewirken, daß die Stufen sich um die gleichen Ausmaße bewegen, wenn der Arm eingezogen wird.

15. Lastträger nach Anspruch 2, dadurch gekennzeichnet, daß hydraulisch betätigte Mittel zwischen den jeweiligen Stufen des Arms vorgesehen sind, um das Ausziehen/Einziehen des Arms zu steuern.

16. Lastträger nach Anspruch 1, dadurch gekennzeichnet, daß das Drehlager für den Arm an einer Stütze angebracht ist, die an der Basis für eine Rotation um eine vertikale Achse herum angebracht ist, um den Arm um die Achse herum zu schwenken.

17. Lastträger nach Anspruch 1, dadurch gekennzeichnet, daß die Basis (11) auf Rädern (13, 14) zur Bewegung der Basis über den Boden/Grund gelagert ist.

18. Lastträger nach Anspruch 2, wobei antriebsbetätigte Mittel vorgesehen sind zum Ausziehen/Einziehen des Arms (10) und Neigen des Arms um die horizontale Achse (29), und eine Fernsteuereinheit (105, 106) vorgesehen ist, um die Antriebsmittel zu steuern.

19. Lastträger nach Anspruch 2, wobei die Antriebsmittel umfassen: eine erste Antriebseinheit, die zwischen benachbarten Stufen des Arms zum Ausziehen/Einziehen des Arms wirkt, und eine zweite Antriebseinheit, die auf den Arm wirkt, um den Arm um die horizontale Achse zu drehen.

20. Lastträger nach Anspruch 19, wobei der Arm eine Steuerstelle bei einem Radius von der horizontalen Achse des Arms in einer festen Beziehung zu dem Radius des Nutzlasthalters besitzt, gleichgültig wie der Auszug/Einzug des Arms ist, wodurch eine Bewegung der Steuerstelle durch die Nutzlast in der festen Beziehung reproduziert wird, und die Antriebsmittel auf den Arm an der Steuerstelle wirken, um zu bewirken, daß der Arm ausgezogen/eingezogen und geneigt wird.

21. Lastträger nach Anspruch 20, wobei die auf die Steuerstelle des Arms wirkenden Antriebsmittel zwei Antriebseinheiten umfassen, um die Steuerstelle in orthogonalen Richtungen zu bewegen, um ein Ausziehen/Einziehen und ein Neigen des Arms zu bewirken.

22. Lastträger nach Anspruch 21, wobei eine der Antriebseinheiten in einer vertikalen Richtung auf die Steuerstelle wirkt und die andere Antriebseinheit in einer horizontalen Richtung auf die Steuerstelle wirkt.

23. Lastträger nach Anspruch 17, wobei eine weitere Antriebseinheit vorgesehen ist, um den Arm um eine vertikale Achse zu drehen, die sich durch die horizontale Achse, um welche sich der Arm neigt, erstreckt, wobei die weitere Antriebseinheit auch unter der Steuerung der Steuereinheiten steht.

24. Ausbalancierter Lastträger nach Anspruch 1, wobei der Nutzlasthalter an dem Arm dazu ausgebildet ist, eine TV-, Video- oder Filmkamera aufzunehmen, die zur Schwenk- und Neigungsbewegung an dem Halter angebracht ist.

25. Lastträger nach Anspruch 24, wobei Servomotoren vorgesehen sind, um die Kamera relativ zum Halter in Schwenk- und Neigungsrichtungen relativ zum Halter zu bewegen, und Steuermittel vorgesehen sind, um die Schwenk- und Neigungsbewegung der Kamera zu bewirken.

26. Lastträger nach Anspruch 25, wobei die Steuermittel für die Servomotoren benachbart demjenigen Ende des Arms angeordnet sind, welches von dem Nutzlasthalter entfernt ist.

27. Lastträger nach Anspruch 26, wobei die Steuermittel einen universell angebrachten Steuerarm umfassen, dessen Drehung um eine vertikale Achse eine Schwenkbewegung der Kamera und dessen Drehung um die horizontale Achse eine Neigungsbewegung der Kamera durch die Servomotoren bewirkt.

28. Lastträger nach Anspruch 27, wobei eine Visiervorrichtung an dem Steuerarm angebracht und entfernt mit der Kamera gekoppelt ist, um das Sichtfeld der Kamera an dem Steuerteil zu reproduzieren.

## Revendications

1. Support de charge équilibré, comprenant un bras à plusieurs étages (10) pouvant être allongé, une embase (11) sur laquelle le bras est monté sur un premier (24) de ses étages de manière à effectuer un mouvement de pivotement dans un plan vertical autour d'un axe horizontal (29), un support (32) d'une charge utile monté sur un autre étage (28) du bras et un moyen (23) pour exercer une charge d'équilibrage sur le bras, à un rayon à partir dudit axe qui varie automatiquement avec la mise en extension et en retrait du bras dans un rapport fixe avec le rayon du support de charge utile de part et d'autre dudit axe de manière que le bras, sur le support duquel une charge utile est placée, soit équilibré dans la totalité de sa plage de mise en extension/de retrait ; caractérisé en ce qu'un point de commande (39) est prévu sur un étage du bras qui est différent dudit premier étage et à un rayon à partir dudit axe et dans un rapport fixe avec le rayon du support de la charge utile, quel que soit la mise en extension/en retrait du bras, de manière que le mouvement du point de commande soit reproduit par la charge utile dans ledit rapport fixe, ainsi que des moyens (35, 36, 37, 38) destinés à contraindre le point de commande à se déplacer soit horizontalement, soit verticalement, soit en une combinaison de mouvement horizontal et vertical d'une manière qui correspond au mouvement de la charge utile.

2. Support de charge selon la revendication 1, caractérisé en ce que le bras (10) est monté pivotant sur l'embase par un étage (27) situé à ou au voisinage d'une extrémité du bras et le support (32) de la charge utile est placé à l'autre extrémité du bras.

3. Support de charge selon la revendication 1, caractérisé en ce que ledit moyen de contrainte comprend une coulisse orientée verticalement et dans laquelle un guide placé audit point de commande se loge et une coulisse orientée horizontalement (35) borne le mouvement de ladite coulisse verticale, des moyens étant prévus pour bloquer le guide dans la coulisse verticale et pour bloquer la coulisse verticale dans la coulisse horizontale pour commander le mouvement du point de commande selon les nécessités.

4. Support de charge selon la revendication 1, caractérisé en ce que le point de commande (39) situé sur le bras (10) est guidé par une structure de guidage délimitant une voie prescrite et un suiveur de came est placé sur le bras au point de commande de manière à entrer en prise avec, et à être guidé par, la structure de guidage pour commander le mouvement du bras de support.

5. Support de charge selon la revendication 1, caractérisé en ce que des moyens de commande sont prévus pour déplacer ledit point de commande (39) horizontalement, verticalement ou en toute combinaison de ces mouvements.

6. Support de charge selon la revendication 1, caractérisé en ce que le point de commande (39) est placé sur un étage (23) du bras qui est voisin de l'étage (24) sur lequel le bras est monté pour tourner autour dudit axe horizontal.

7. Support de charge selon la revendication 1, caractérisé en ce que les moyens d'exercice d'une charge d'équilibrage sur le bras comprennent un poids (23) et/ou un dispositif d'exercice d'une force agissant verticalement sur le bras, sur le même étage ou sur des étages séparés.

8. Support de charge selon la revendication 7, caractérisé en ce que le bras (10) est monté pivotant autour dudit axe horizontal à un étage voisin d'une extrémité du bras et un poids et/ou un dispositif d'exercice d'une force agit sur l'étage situé à ladite une extrémité.

9. Support de charge selon la revendication 8, caractérisé en ce qu'un dispositif d'exercice d'une force agit sur ledit étage d'extrémité (23) du bras (10) ou un autre étage du bras situé sur l'autre côté de l'axe horizontal.

10. Support de charge selon la revendication 7, caractérisé en ce que le poids ou le dispositif d'exercice d'une force est réglable pour l'adaptation à différentes charges utiles situées sur le support (32) de charge utile.

11. Support de charge selon la revendication 3, caractérisé en ce que le dispositif d'exercice d'une charge est monté sur la coulisse de manière à agir sur le bras par ledit point de commande.

12. Support de charge selon la revendication 1, caractérisé en ce que le bras (10) pouvant être allongé est un bras télescopique.

13. Support de charge selon la revendication 2, caractérisé en ce qu'un système à poulies (76 à 80) relie les étages pour faire se déplacer les étages (23 à 28) sur les mêmes distances les uns par rapport aux autres lorsque le bras est mis en extension/en retrait.

14. Support de charge selon la revendication 13, caractérisé en ce qu'un système à poulies (76 à 80) est prévu pour faire se déplacer les étages sur les mêmes distances lorsque le bras est mis en extension et un autre système à poulies est prévu pour faire se déplacer les étages sur les mêmes distances lorsque le bras est raccourci.

15. Support de charge selon la revendication 2, caractérisé en ce que des moyens actionnés hydrauliquement sont prévus entre les étages respectifs du bras pour commander la mise en extension/en retrait du bras.

16. Support de charge selon la revendication 1, caractérisé en ce que le pivot du bras est monté sur un support qui est monté sur ladite embase de manière à tourner autour d'un axe vertical pour faire basculer le bras autour dudit axe.

17. Support de charge selon la revendication 1, caractérisé en ce que l'embase (11) est supportée sur des roues (13, 14) pour le déplacement de l'embase sur le plancher/le sol.

18. Support de charge selon la revendication 2, dans lequel des moyens motorisés sont prévus pour mettre le bras (10) en extension/en retrait et pour incliner le bras autour dudit axe horizontal (29) et un module de télécommande (105, 106) est prévu pour commander les moyens motorisés.

19. Support de charge selon la revendication 2, dans lequel les moyens motorisés comprennent un premier module motorisé agissant entre des étages voisins du bras pour mettre le bras en extension/en retrait et un deuxième module motorisé agissant sur le bras pour faire tourner le bras autour dudit axe horizontal.

20. Support de charge selon la revendication 19, dans lequel le bras comprend un point de commande situé à un rayon à partir de l'axe horizontal du bras dans un rapport fixe avec le rayon du support de charge utile, quel que soit la mise en extension/en retrait du bras, de manière que le mouvement du point de commande soit reproduit par la charge utile dans ledit rapport fixe et lesdits moyens motorisés agissent sur le bras audit point de commande pour mettre le bras en extension/en retrait et pour l'incliner.

21. Support de charge selon la revendication 20, dans lequel les moyens motorisés agissant sur le point de commande du bras comprennent deux modules motorisés pour déplacer le point de commande dans des directions perpendiculaires pour produire la mise en extension/en retrait et l'inclinaison du bras.

22. Support de charge selon la revendication 21, dans lequel l'un des modules motorisés agit dans une direction verticale sur le point de commande et l'autre module motorisé agit dans une direction horizontale sur le point de commande.

23. Support de charge selon la revendication 17, dans lequel un autre module motorisé est prévu pour faire tourner le bras autour d'un axe vertical passant par l'axe horizontal autour duquel le bras s'incline, l'autre module motorisé étant aussi sous la commande desdits modules de commande.

24. Support de charge équilibré selon la revendication 1, dans lequel le support de charge utile placée sur le bras est conçu pour supporter une caméra de T.V., une caméra vidéo ou une caméra cinématographique montée sur le support de manière qu'elle effectue des mouvements panoramiques et d'inclinaison.

25. Support de charge selon la revendication 24, dans lequel des servomoteurs sont prévus pour déplacer la caméra par rapport au support dans des directions panoramique et d'inclinaison par rapport au support et des moyens de commande sont prévus pour produire lesdits mouvements panoramique et d'inclinaison de la caméra.

26. Support de charge selon la revendication 25, dans lequel les moyens de commande des servomoteures sont placés au voisinage de l'extrémité du bras qui est distante du support de charge utile.

27. Support de charge selon la revendication 26, dans lequel les moyens de commande comprennent un bras de commande à montage universel, dont la rotation autour d'un axe vertical provoque le mouvement panoramique de la caméra et la rotation autour de l'axe horizontal provoque le mouvement d'inclinaison de la caméra qui sont produits dans les servomoteurs.

28. Support de charge selon la revendication 27, dans lequel un viseur est monté sur le bras de commande et raccordé à distance à la caméra pour donner une réplique du champ de vue de la caméra à l'emplacement de l'élément de commande.
